Europäisches Patentamt

European Patent Office

Office européen des brevets

(19)

(11) Numéro de publication: **0 052 032**
**B1**

(12) **FASCICULE DE BREVET EUROPEEN**

(45) Date de publication du fascicule du brevet:
11.07.84

(51) Int. Cl.³: **H 04 N 3/16**

(21) Numéro de dépôt: 81401632.5

(22) Date de dépôt: 16.10.81

(54) **Dispositif de balayage de lignes et récepteur de télévision comportant un tel dispositif.**

(30) Priorité: 07.11.80 FR 8023885

(43) Date de publication de la demande:
19.05.82 Bulletin 82/20

(45) Mention de la délivrance du brevet:
11.07.84 Bulletin 84/28

(84) Etats contractants désignés:
DE GB IT

(56) Documents cités:
DE - A - 1 940 216
US - A - 3 758 825
US - A - 4 099 092

R.Ch. HOUZE, Cours de base de TV Couleur Editeur
CHIRON 1971, pages 145-147

(73) Titulaire: **SOCIETE D'ELECTRONIQUE DE LA REGION PAYS DE LOIRE SEREL, 74, rue du Surmelin, F-75020 Paris (FR)**

(72) Inventeur: **Vacher, Michel, THOMSON-CSF SCPI 173, bld Haussmann, F-75360 Paris Cedex 08 (FR)**

(74) Mandataire: **Grynwald, Albert et al, THOMSON-CSF SCPI 173, Bld Haussmann, F-75379 Paris Cedex 08 (FR)**

## Description

L'invention est relative à un dispositif de balayage des lignes pour un récepteur de télévision et à un récepteur de télévision comportant un tel dispositif.

Dans un récepteur de télévision, les images sont formées sur un écran sensiblement plat recouvert d'une substance cathodoluminescente, c'est-à-dire d'un produit qui émet de la lumière lorsqu'il est frappé par un pinceau d'électrons, l'intensité de la lumière émise dépendant de l'intensité du pinceau. Le pinceau d'électrons est engendré par un canon à électrons disposé dans le col du tube du récepteur. Chaque image est obtenue par un déplacement du point d'impact du pinceau sur l'écran, selon une succession de lignes horizontales, de gauche à droite et de haut en bas de l'écran.

Pour effectuer ce balayage de l'écran, on fait appel à deux bobines dont les axes sont généralement disposés à 90° l'un de l'autre à l'extérieur du col du tube et qui sont parcourues par des courants d'intensités variables, et qui engendrent ainsi des champs magnétiques respectivement horizontal et vertical.

La bobine produisant le champ magnétique horizontal est appelée déviateur horizontal, tandis que la bobine produisant le champ magnétique vertical est appelée déviateur vertical ou déviateur trame.

L'invention se rapporte au balayage horizontal, c'est-à-dire au balayage des lignes.

La courbe de variation en fonction du temps de l'intensité du courant fourni au déviateur horizontal doit présenter une forme bien déterminée. Si elle s'écarte de cette forme, l'image est déformée.

Le courant fourni à la bobine de déviation horizontale est généralement produit à l'aide d'un générateur de signaux en dents de scie, c'est-à-dire des signaux à variation linéaire périodique, et d'organes correcteurs permettant d'effectuer une correction de linéarité, une correction dite en S et une correction de la distorsion (ou déformation) de coussin est-ouest.

Jusqu'à présent, pour effectuer la correction de linéarité, on a utilisé, en série avec le déviateur horizontal, une inductance dite de linéarité constituée par une bobine enroulée sur un noyau de ferrite auquel est associé un aimant mobile. Etant donné que plus le noyau magnétique est saturé, plus la valeur de l'inductance est faible, cette valeur, et donc l'intensité du courant traversant cette inductance de linéarité, varie en fonction de la position de l'aimant par rapport au noyau magnétique et en fonction de l'intensité et du sens du courant fourni au déviateur. C'est cette variation d'inductance qui permet d'effectuer la correction de linéarité.

Le réglage est effectué une fois pour toutes en conférant une position déterminée à l'aimant par rapport au noyau magnétique.

Mais, comme dans un téléviseur en couleurs il faut éviter au maximum les champs magnétiques qui pourraient affecter la pureté des couleurs, il est nécessaire de choisir avec soin l'implantation de l'aimant. Une telle contrainte est gênante pour la fabrication, notamment en série, de téléviseurs en couleurs.

Malgré cet inconvénient, cette inductance de correction est utilisée de façon courante, car on pensait jusqu'ici qu'elle effectuait une correction de linéarité très satisfaisante.

On a constaté que, au contraire, la qualité de ce type de correction pouvait être améliorée dans des proportions notables, et que le manque de qualité était encore aggravé par le fait que, lors de la fabrication en série de noyaux magnétiques pour des inductances de correction de linéarité, la dispersion des seuils de saturation de ces noyaux est importante et, ainsi, la qualité de la correction effectuée est très variable.

Pour effectuer la correction de coussin est-ouest, on fait appel à un transducteur, c'est-à-dire à un circuit magnétique sur lequel sont bobinés deux enroulements en série avec le déviateur horizontal, ainsi qu'un enroulement supplémentaire parcouru par le courant de déviation verticale. On a également constaté que la qualité de la correction pouvait être améliorée et que la dispersion des seuils de saturation apportait le même inconvénient que pour la correction de linéarité.

Le dispositif de balayage horizontal selon l'invention est exempt de tels défauts.

Il est caractérisé en ce que, autour du noyau de l'inductance de correction de linéarité et/ou de l'inductance de correction de coussin est-ouest, est disposé un enroulement supplémentaire auquel, pour chaque ligne, est fourni, grâce à une mémoire, un courant dont l'intensité varie de façon prédéterminée afin que le courant traversant le déviateur horizontal présente la correction désirée, les valeurs de courant fournies à l'enroulement supplémentaire différant d'une ligne à une autre grâce à un moyen pour modifier le contenu de la mémoire à chaque ligne.

Le brevet US N° 4099092 se rapporte à un dispositif de balayage pour récepteur de télévision comportant une mémoire; mais cette mémoire est une mémoire ROM, c'est-à-dire dont le contenu ne peut être modifié.

On peut ainsi, en ajustant la courbe de variation en fonction du temps du courant fourni à la bobine supplémentaire, obtenir une correction de linéarité et/ou en S et/ou de coussin est-ouest de bonne qualité.

Le même enroulement peut être utilisé pour effectuer les trois types de corrections.

Dans le mode de réalisation préféré de l'invention, dans la mémoire sont stockées M valeurs de l'intensité du courant à fournir à l'enroulement supplémentaire pour des instants régulièrement espacés dans le temps, entre le début et la fin du balayage de chaque ligne, et des moyens, tels qu'un générateur d'horloge et un compteur, sont prévus pour que ces courants alimentent l'enroulement supplémentaire aux instants correspondants.

Bien entendu, plus le nombre de valeurs stockées en mémoire pour chaque ligne sera grand, meilleure pourra être la qualité de la correction. Dans un exemple, ce nombre M est égal à 100.

Pour effectuer une correction de linéarité ou en S, le générateur fournit la même suite de valeurs à chaque ligne.

Pour la correction de coussin est-ouest, le générateur fournit des suites de valeurs qui varient d'une ligne à une autre.

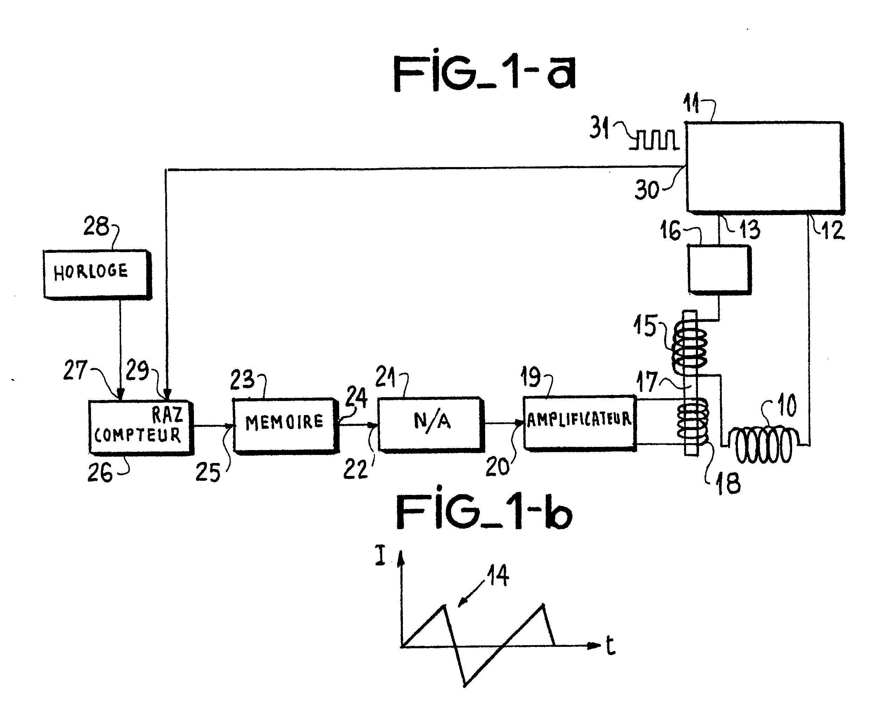

D'autres dispositions de l'invention apparaîtront avec la description de certains de ses modes de réalisation, celle-ci étant effectuée en se référant aux dessins ci-annexés sur lesquels: la fig. 1a est un schéma d'un circuit de balayage horizontal selon l'invention;

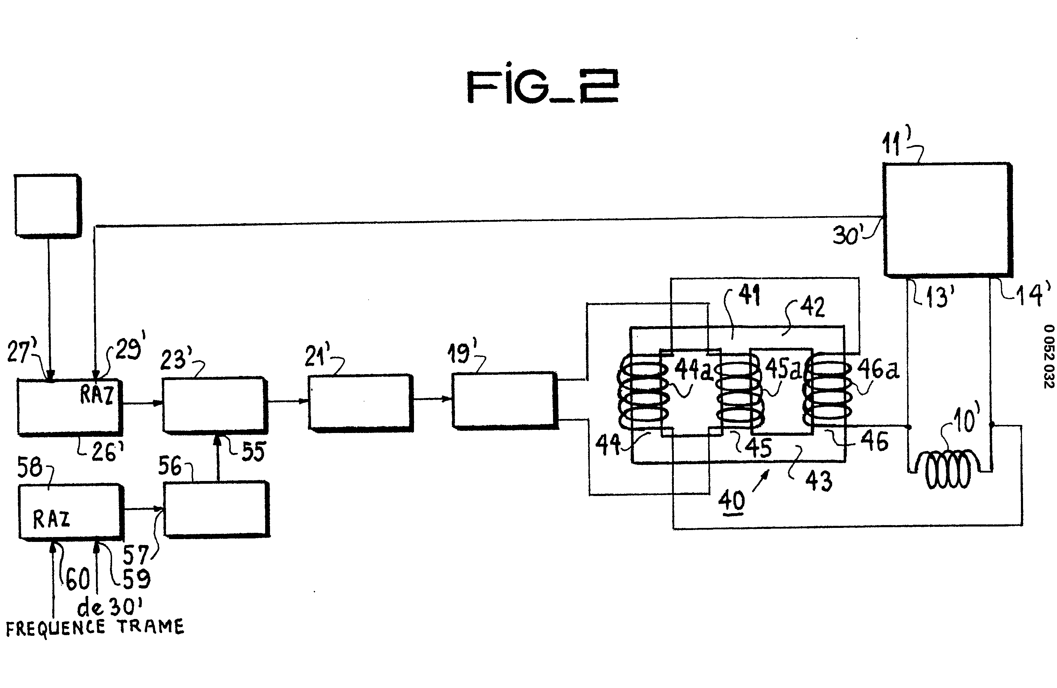

la fig. 1b est un diagramme de courant, et la fig. 2 est un schéma analogue à celui de la fig. 1a, mais pour une variante.

Dans l'exemple représenté sur la fig. 1a, le dispositif de balayage horizontal pour récepteur de télévision en couleurs comprend une bobine de déviation horizontale 10 engendrant, lorsqu'elle est parcourue par un courant électrique, un champ magnétique agissant sur le pinceau d'électrons produit par le canon à électrons, à l'intérieur du tube cathodique, pour déplacer ce pinceau selon des lignes horizontales, la loi de variation de ce courant en fonction du temps étant bien déterminée de façon que l'image obtenue sur l'écran du téléviseur ne soit pas affectée de déformations ou de distorsions.

Pour engendrer ce courant, on prévoit un circuit de balayage 11 à sorties 12 et 13 délivrant un courant variant en dents de scie, comme représenté par la courbe 14 sur la fig. 1b qui est un graphique montrant les variations en fonction du temps de l'intensité I du courant engendré par ledit circuit 11.

La sortie 12 est reliée à une borne du déviateur 10 et l'autre borne de ce dernier est connectée à la sortie 13 du circuit 11 par l'intermédiaire, d'une part, d'une bobine 15 de correction de linéarité et en S et, d'autre part, d'un organe 16 de correction de coussin est-ouest en soi connu.

La bobine 15 et l'organe 16 déforment la courbe 14 en dents de scie de manière que l'image apparaissant sur l'écran de télévision soit affectée d'un minimum de distorsions.

La bobine 15 est enroulée sur un noyau magnétique 17 en ferrite.

Selon l'invention, sur le noyau 17 est également enroulée une bobine supplémentaire 18 alimentée en courant par un générateur 19, constitué par exemple par un amplificateur, dont l'entrée 20 est reliée à la sortie d'un convertisseur numérique/analogique 21 recevant sur son entrée 22 les signaux fournis par une mémoire 23 dans laquelle sont stockés M mots de N bits chacun.

Cette mémoire 23 délivre sur sa sortie 24 un mot de N bits se trouvant à l'adresse qui correspond au nombre appliqué sur son entrée d'adressage 25 et fourni par un compteur 26.

L'entrée 27 de comptage du compteur 26 est reliée à la sortie d'un générateur 28 de signaux d'horloge, généralement dénommé horloge, permettant d'engendrer M impulsions espacées régulièrement entre le début et la fin du balayage d'une ligne. La fréquence du signal d'horloge est donc M fois la fréquence de balayage ligne.

L'entrée 29 de remise à zéro RAZ du compteur 26 est connectée à une sortie 30 du circuit 11 délivrant une impulsion 31 à chaque retour de balayage de ligne. Pour obtenir ces impulsions 31, on peut faire appel à la surtension aux bornes du déviateur 10 lors de la période de retour de ligne.

Le fonctionnement est le suivant.

Le contenu du compteur 26 est égal à zéro au début de chaque ligne grâce à l'application des impulsions 31 sur son entrée 29, et ce contenu est augmenté d'une unité à chaque fois qu'est appliqué un signal d'horloge sur son entrée 27.

En sortie 24 de la mémoire 23 apparaît un mot numérique de N bits stocké à l'adresse indiquée par le signal appliqué sur son entrée d'adressage 25, c'est-à-dire à l'adresse correspondant au contenu du compteur.

Ainsi, du début à la fin de chaque ligne, le courant parcourant la bobine 18 prend M valeurs, M étant par exemple égal à 100.

La valeur de l'inductance de la bobine 15 — et donc l'intensité du courant traversant le déviateur 10 — dépend de la saturation du noyau de ferrite 17, laquelle dépend de l'intensité du courant traversant la bobine supplémentaire 18.

Ainsi, par un choix convenable de la courbe de variation du courant délivré à la bobine 18, on peut obtenir une variation de l'intensité du courant dans le déviateur 10 telle que l'image soit affectée d'un minimum de distorsions. Ce choix est déterminé une fois pour toutes, par exemple de façon automatique, en usine.

On se réfère maintenant à la fig. 2.

Sur cette figure, les éléments qui correspondent à des éléments analogues de la fig. 1 porteront la même référence affectée de l'indice prime.

Dans cet exemple, à la place de la bobine 15 de correction de linéarité et en S, et d'un élément 16 de correction de coussin est-ouest, on prévoit un unique transducteur 40 permettant d'effectuer simultanément les trois corrections.

Le transducteur 40 comporte un circuit magnétique 41 à deux branches parallèles 42 et 43 reliées entre elles par trois branches transversales 44, 45 et 46. La branche 45 est en position médiane, tandis que les branches 44 et 46 sont aux extrémités.

Autour de la branche centrale 45 est enroulée une bobine 45a et autour des branches d'extrémités 44 et 46 sont enroulées des bobines 44a et 46a, respectivement.

La bobine 45a est alimentée par le générateur 19'. Les bobines 44a et 46a sont en série, et l'ensemble formé par ces bobines en série est en parallèle sur le déviateur 10'.

La réalisation de l'invention représentée sur la fig. 2 se distingue en outre de celle décrite en relation avec la fig. 1 par le fait que la mémoire 23', dans laquelle sont stockés M mots de N bits chacun, présente une entrée 55 de chargement reliée à la sortie d'une mémoire 56, de plus grande capacité que la mémoire 23', dans laquelle sont stockés un nombre d'ensembles de M mots de N bits chacun qui est égal au nombre de lignes.

L'entrée d'adressage 57 de la mémoire 56 est reliée à la sortie d'un compteur 58 dont l'entrée de comptage 59 est reliée à la sortie 30' du circuit 11' fournissant une impulsion à chaque retour de ligne, et dont l'entrée 60 de remise à zéro reçoit des impulsions à la fréquence trame.

Ainsi, le contenu du compteur 58 représente le numéro de la ligne balayée. Le contenu étant modifié à chaque retour de ligne, le signal appliqué sur l'entrée d'adressage 57 de la mémoire 56 change également à chaque retour de ligne et, ainsi, les signaux appliqués sur l'entrée 55 de la mémoire 23' sont modifiés, et le contenu de cette mémoire est l'ensemble de M mots de N bits chacun pour la ligne dont le numéro est enregistré par le compteur 58.

Le fonctionnement est, pour le reste, identique à celui du dispositif représenté sur la fig. 1.

On conçoit que, en modifiant d'une ligne à une autre la séquence de M mots, on peut effectuer non seulement les corrections de linéarité et en S mais également la correction de coussin est-ouest.

Les n ensembles de M mots de N bits (n est égal au nombre de lignes) stockés dans la mémoire 56 sont déterminés de façon automatique en usine, afin d'obtenir le minimum de distorsions de l'image.

**Revendications**

1. Dispositif de balayage horizontal pour récepteur de télévision comprenant un générateur de courant (11') variant périodiquement en dents de scie, un moyen de correction de linéarité et un moyen de correction de coussin est-ouest agissant avec le générateur de courant pour alimenter la bobine de déviation horizontale (10'), au moins l'un des moyens de correction comportant une bobine enroulée autour d'un noyau magnétique saturable, caractérisé en ce qu'autour du noyau est disposé un enroulement supplémentaire auquel, pour chaque ligne, est fourni, grâce à une mémoire (23'), un courant dont l'intensité varie de façon prédéterminée afin que le courant traversant le déviateur présente la correction de coussin est-ouest, les valeurs de courant fournies à l'enroulement supplémentaire différant d'une ligne à une autre grâce à un moyen (56, 58) pour modifier le contenu de la mémoire (23') à chaque ligne.

2. Dispositif selon la revendication 1, caractérisé en ce que le moyen pour modifier le contenu de la mémoire (23') comporte une seconde mémoire (56) dans laquelle sont stockés n ensembles de M valeurs, n étant égal au nombre de lignes de l'image.

3. Dispositif selon la revendication 2, caractérisé en ce qu'il comporte un compteur (58) dont la sortie est reliée à l'entrée d'adressage (57) de la seconde mémoire (56), et dont l'entrée de comptage (59) reçoit des impulsions de retour ligne et l'entrée de remise à zéro (60) reçoit des impulsions à la fréquence de balayage vertical.

4. Dispositif selon l'une des revendications 1 à 3, caractérisé en ce que les valeurs stockées en mémoire permettent d'effectuer la correction de linéarité et la correction en S simultanément à la correction de coussin est-ouest.

5. Dispositif selon l'une des revendications précédentes, caractérisé en ce que l'enroulement supplémentaire (45a) est autour de la branche centrale (45) d'un transducteur (40) autour des deux autres branches (44, 46) duquel sont disposés deux enroulements (44a, 46a) en série, l'ensemble de ces deux enroulements en série étant en parallèle sur la bobine de déviation horizontale (10').

6. Dispositif selon l'une des revendications précédentes, caractérisé en ce que dans la mémoire (23') sont stockées M valeurs de courant à fournir à l'enroulement supplémentaire pendant $1/M^e$ du temps de balayage d'une ligne, et en ce que des moyens sont prévus pour que l'enroulement supplémentaire soit alimenté en succession par ces courants ayant ces valeurs au cours du balayage de chaque ligne.

7. Dispositif selon la revendication 6, caractérisé en ce que les moyens permettant d'extraire en séquence les M valeurs de la mémoire (23') comprennent un compteur (26') dont la sortie est reliée à l'entrée d'adressage (25') de la mémoire et un générateur de signaux d'horloge connecté à l'entrée de comptage (27') dudit compteur et engendrant M impulsions au cours de chaque balayage de ligne, l'entrée (29') de remise à zéro du compteur recevant une impulsion à chaque retour de ligne.

8. Dispositif selon l'une des revendications 6 ou 7, caractérisé en ce que les valeurs stockées dans la mémoire (23') sont sous forme de mots numériques à N bits chacun, la sortie de cette mémoire étant reliée à l'enroulement supplémentaire par l'intermédiaire d'un convertisseur numérique/analogique (21').

9. Dispositif selon l'une des revendications précédentes, caractérisé en ce que les valeurs stockées en mémoire permettent d'effectuer la correction de linéarité.

10. Dispositif selon la revendication 9, caractérisé en ce que les valeurs stockées en mémoire permettent d'effectuer la correction en S.

11. Dispositif selon la revendication 6, caractérisé en ce que M est de l'ordre de 100.

12. Récepteur de télévision, notamment en couleurs, caractérisé en ce qu'il comporte un dispositif de balayage horizontal selon l'une des revendications précédentes.

**Claims**

1. Horizontal deflection device for television receivers comprising a current generator (11') for generating a periodically varying saw-tooth current, a linearity correction means and a pin cushion east-west correction means co-operating with the current generator to feed the horizontal deflection coil (10'), at least one of the correction means comprising a coil wound round a saturable magnetic core, characterized in that around the core a supplementary winding is disposed to which is supplied for each line, by means of a memory (23'), a current whose intensity varies in predetermined manner so that the current traversing the deflector provides the pin cushion east-west correction, the values of the current supplied to the supplementary winding differing from one line to another due to a means (56, 58) for modifying the content of the memory (23') at each line.

2. Device according to claim 1, characterized in that the means for modifying the content of the memory (23') comprise a second memory (56) in which are stored n sets of M values, n being equal to the number of lines of the image.

3. Device according to claim 2, characterized in that it comprises a counter (58) whose output is connected to the address input (57) of the second memory (56) and whose count input (59) receives the line flyback pulses, the zero reset input (60) receiving pulses with the vertical sweep frequency.

4. Device according to one of claims 1 to 3, characterized in that the values stored in the memory permit the execution of the linearity correction and the S correction simultaneously with the pin cushion east-west correction.

5. Device according to one of the preceding claims, characterized in that the supplementary winding (45a) is around the central branch (45) of a transducer (40) around the other two branches (44, 46) of which two windings (44a, 46a) in series are disposed, the whole of said two windings in series being parallel to the horizontal deflection coil (10').

6. Device according to one of the preceding claims, characterized in that in the memory (23') M current values are stored which are to be supplied to the supplementary winding during 1/Mth of the sweep time of a line, and in that means are provided for supplying the supplementary winding in succession with currents having said values in the course of the sweeping of each line.

7. Device according to claim 6, characterized in that the means permitting sequential extraction of the M values from the memory (23') comprise a counter (26') whose output is connected to the address input (25') of the memory, and a clock signal generator connected to the count input (27') of said counter and generating M pulses in the course of each line sweep, the zero reset input (29') of the counter receiving a pulse on each line flyback.

8. Device according to one of claims 6 or 7, characterized in that values stored in the memory (23') are in the form of digital words each of N bits, the output of said memory being connected to the supplementary winding by way of a digital/ analogue converter (21').

9. Device according to one of the preceding claims, characterized in that the values stored in the memory permit the linearity correction.

10. Device according to claim 9, characterized in that the values stored in the memory permit the S correction.

11. Device according to claim 6, characterized in that M is of the order of magnitude of 100.

12. Television receiver, in particular for color television, characterized in that it comprises a horizontal deflection device according to one of the preceding claims.

**Patentansprüche**

1. Horizontalablenkvorrichtung für Fernsehempfänger, mit einem Stromgenerator (11') zur Erzeugung eines periodisch veränderlichen, sägezahnförmigen Stromes, einer Linearitätskorrektureinrichtung und einer Ost-West-Kissenverzerrungs-Korrektureinrichtung, welche mit dem Stromgenerator zusammenwirkt, um die Horizontalablenkspule (10') zu speisen, wobei wenigstens eine der Korrektureinrichtungen eine Spule umfasst, die um einen sättigbaren Magnetkern aufgewickelt ist, dadurch gekennzeichnet, dass auf dem Kern eine zusätzliche Wicklung angeordnet ist, der für jede Zeile mittels eines Speichers (23') ein Strom zugeführt wird, dessen Stärke in vorbestimmter Form variiert, damit der die Ablenkeinheit durchfliessende Strom die Ost-West-Kissenkorrektur ergibt, wobei die Werte des der zusätzlichen Wicklung zugeführten Stromes von einer Zeile zur anderen durch die Wirkung einer Einrichtung (56, 58) zum Verändern des Inhalts des Speichers (23') in jeder Zeile verschieden sind.

2. Vorrichtung nach Anspruch 1, dadurch gekennzeichnet, dass die Einrichtung zum Verändern des Inhalts des Speichers (23') einen zweiten Speicher (56) umfasst, in welchem n Mengen von M Werten gespeichert sind, wobei n gleich der Anzahl von Zeilen des Bildes ist.

3. Vorrichtung nach Anspruch 2, dadurch gekennzeichnet, dass sie einen Zähler (58) enthält, dessen Ausgang mit dem Adressiereingang (57) des zweiten Speichers (56) verbunden ist und dessen Zähleingang (59) die Zeilenrücklaufimpulse empfängt, während der Nullrücksetzeingang (60) Impulse mit der Vertikalablenkfrequenz empfängt.

4. Vorrichtung nach einem der Ansprüche 1 bis 3, dadurch gekennzeichnet, dass die im Speicher gespeicherten Werte es ermöglichen, die Linearitätskorrektur und die S-Korrektur gleichzeitig mit der Ost-West-Kissenkorrektur vorzunehmen.

5. Vorrichtung nach einem der vorstehenden Ansprüche, dadurch gekennzeichnet, dass die zusätzliche Wicklung (45a) um den Mittelschenkel (45) eines Wandlers (40) aufgebracht ist, auf dessen zwei andere Schenkel (44, 46) zwei in Reihe liegende Wicklungen (44a, 46a) aufgebracht sind, wobei die Gesamtheit dieser zwei in Reihe liegenden Wicklungen parallel zu der Horizontalablenkspule (10') liegt.

6. Vorrichtung nach einem der vorstehenden Ansprüche, dadurch gekennzeichnet, dass in dem Speicher (23') M Stromwerte gespeichert sind, die der zusätzlichen Wicklung während 1 Mtels der Ablenkzeit für eine Zeile zuzuführen sind, und dass Mittel vorgesehen sind, um in die zusätzliche Wicklung aufeinanderfolgend Ströme einzuspeisen, welche im Verlauf der Ablenkung jeder Zeile diese Werte besitzen.

7. Vorrichtung nach Anspruch 6, dadurch gekennzeichnet, dass die Mittel zur sequentiellen Entnahme der M Werte aus dem Speicher (23') einen Zähler (26'), dessen Ausgang mit dem Adressiereingang (25') des Speichers verbunden ist, und einen Taktsignalgenerator enthalten, welcher an den Zähleingang (27') des Zählers angeschlossen ist und M Impulse im Verlauf jeder Zeilenablenkung erzeugt, wobei der Nullrücksetzeingang (29') des Zählers einen Impuls bei jedem Zeilenrücklauf empfängt.

8. Vorrichtung nach einem der beiden Ansprüche 6 oder 7, dadurch gekennzeichnet, dass die in dem Speicher (23') gespeicherten Werte in Form von Digitalwörtern zu jeweils N Bits vorliegen, wobei der Ausgang dieses Speichers mit der zusätzlichen Wicklung über einen Digital-/Analog-Umsetzer (21') verbunden ist.

9. Vorrichtung nach einem der vorstehenden Ansprüche, dadurch gekennzeichnet, dass die im Speicher gespeicherten Werte die Linearitätskorrektur ermöglichen.

10. Vorrichtung nach Anspruch 9, dadurch gekennzeichnet, dass die im Speicher gespeicherten Werte die S-Korrektur ermöglichen.

11. Vorrichtung nach Anspruch 6, dadurch gekennzeichnet, dass M in der Grössenordnung von 100 liegt.

12. Fernsehempfänger, insbesondere für Farbfernsehen, dadurch gekennzeichnet, dass er eine Horizontalablenkvorrichtung nach einem der vorstehenden Ansprüche umfasst.

# FiG_1-a

HORLOGE  28

27  RAZ COMPTEUR  26

29

30  31

11  12  13  16

15  17  18  10

23  MEMOIRE  25  24

21  N/A  22  20

19  AMPLIFICATEUR

# FiG_1-b

I

14

t

# FIG_2

11'

30'

13'    14'

0 052 032

41    42

44a    45a    46a

44    45    46

40    43

10'

27'    29'    23'    21'    19'

6

RAZ

26'    55

58    56

RAZ

57

60    59

de 30'

FREQUENCE TRAME